# EUROPÄISCHE PATENTSCHRIFT

(11) **EP 3 303 012 B1**
(45) Veröffentlichungstag und Bekanntmachung des Hinweises auf die Patenterteilung: **19.06.2019**
(21) Anmeldenummer: 16702737.4
(22) Anmeldetag: 04.02.2016
(51) Int. Cl.: B60C 19/00, B60C 19/12

(54) **FAHRZEUGLUFTREIFEN MIT SCHALLABSORBER**
PNEUMATIC VEHICLE TIRE WITH NOISE ABSORBER
PNEUMATIQUE DE VÉHICULE AVEC AMORTISSEUR DE BRUIT

(30) Priorität: 01.06.2015 DE 102015210039
(43) Veröffentlichungstag der Anmeldung: 11.04.2018
(73) Patentinhaber: Continental Reifen Deutschland GmbH, 30165 Hannover (DE)
(72) Erfinder: BAUER, Wilhelm, 31535 Neustadt a. Rbg. (DE)
(74) Vertreter: Finger, Karsten
(86) Internationale Anmeldenummer: PCT/EP2016/052325
(87) Internationale Veröffentlichungsnummer: WO 2016/192861

(56) Entgegenhaltungen:
- EP-A1- 2 006 125
- EP-A2- 2 433 786
- US-A1- 2010 307 655

## Beschreibung

Die Erfindung betrifft einen Fahrzeugluftreifen mit einem in seinem Inneren an der dem Laufstreifen gegenüberliegenden Innenfläche haftend angebrachten Schallabsorber aus Schaumstoff, wobei der Schallabsorber eine Auflageseite aufweist, mit welcher dieser an einem vorab aufgebrachten, selbsttätig abdichtenden Dichtmittel haftet und wobei das Dichtmittel zumindest unmittelbar nach seinem Aufbringen eine zum Anhaften des Schallabsorbers erforderliche Klebrigkeit aufweist.

Ein derartiger Fahrzeugluftreifen ist aus der DE 10 2007 028932 A1 bekannt. Der Schallabsorber, auch Innenabsorber genannt, ist ein Ring aus offenzelligem Schaumstoff, welcher die Luftschwingung im Reifen reduziert und zu einer Verbesserung des Geräuschverhaltens im Fahrzeug führt. Das an der Reifeninnenseite aufgebrachte hochviskose Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.

Jedoch kann das Fließverhalten des hochviskosen Dichtmittels durch den auf dem Dichtmittel vollflächig aufliegenden Innenabsorber nachteilig beeinflusst sein, so dass die erwünschte Dichtwirkung erst verspätet oder gar nicht eintritt. In Fällen, in denen der eindringende Fremdkörper aus dem Reifen wieder austritt und einen großen Luftkanal hinterlässt, ist eine zuverlässige Abdichtung durch das in seinem Fließverhalten nachteilig beeinflusste Dichtmittel, insbesondere bei niedrigen Temperaturen, besonders schwierig.

Der Erfindung liegt die Aufgabe zu Grunde, die Abdichtung des Reifens bei Durchstichen bei zumindest gleichguter Schallabsorption zu verbessern.

Gelöst wird die gestellte Aufgabe erfindungsgemäß dadurch, dass die Auflageseite des Schallabsorbers eine Auflagefläche auf dem Dichtmittel aufweist, die zwischen 5% und 50% in Bezug auf die Gesamtfläche der Auflageseite einnimmt.

Erfindungsgemäß ist der Schallabsorber ausgebildet und ringkreisförmig im Reifeninneren angeordnet. Dadurch, dass der Schallabsorber nicht vollflächig mit dem Dichtmittel verklebt ist, sondern nur die Auflagefläche, welche eine wesentlich geringere Fläche als die Gesamtfläche der Auflageseite einnimmt, ist viel freie Dichtmitteloberfläche geschaffen. Hierdurch ist das Fließverhalten des Dichtmittels bei Durchstichen und somit die Abdichtung des Reifens verbessert. Zudem ist die Wahrscheinlichkeit reduziert, dass ein Ein-/Durchstich innerhalb der Auflagefläche des Schallabsorbers liegt, wodurch die Abdichtung ebenfalls verbessert ist. Trotz der reduzierten Auflagefläche ist diese noch groß genug, um einen hohen Widerstand gegenüber den bei schneller Fahrt auftretenden Fliehkräften zu leisten.

Dabei kann der Schallabsorber ein geschlossener oder ein offener Ring sein. "Offen" meint dabei, dass der Ring nicht ringkreisförmig geschlossen ist, sondern zwei Enden aufweist, zwischen denen eine Lücke ausgebildet ist.

"Auflageseite" meint die diejenige Seite des Schallabsorbers, welche dem Dichtmittel zugewandt ist.

"Auflagefläche" meint diejenige Fläche der Auflageseite, welche unmittelbar mit dem Dichtmittel in (Haft)-Kontakt tritt.

"Gesamtfläche der Auflageseite" meint diejenige Fläche, die bedeckt wäre, wenn ein ebener Körper mit den selben Außenkantenlängen auf dem Dichtmittel aufliegen würde.

Die Dichtmittelschicht ist ringkreisförmig an der Innenseite des Reifens unterhalb des Laufstreifens angeordnet und weist zumindest eine derartige Breite auf die etwa der Breite der Gürtellagen des Reifens entspricht.

Zur weiteren Verbesserung der Abdichtung weist die Auflageseite des Schallabsorbers eine Auflagefläche auf dem Dichtmittel zwischen 10% und 40%, bevorzugt zwischen 10% und 30% in Bezug auf die Gesamtfläche der Auflageseite auf. Je kleiner die Auflagefläche ist, desto besser ist die Abdichtung bei Durchstichen. Jedoch muss die Auflagefläche noch derart groß sein, dass der Schallabsorber sicher auf dem Dichtmittel zu befestigen ist.

In einer bevorzugten Ausführung der Erfindung ist der Schallabsorber ein Noppenschaumstoff, wobei die Auflageseite des Schallabsorbers die Noppen aufweist, wobei die Noppenspitzen auf dem Dichtmittel aufliegen und wobei vorzugsweise der Noppenschaumstoff eine Dicke von 10 mm bis 50 mm, bevorzugt von 20 mm bis 30 mm aufweist. Hier ist zusätzlich zur verbesserten Abdichtung ebenfalls die Schallabsorption durch eine Vergrößerung der Oberfläche des Schallabsorbers verbessert. Weiterhin sind durch die Abdeckung der klebrigen Dichtmitteloberfläche Verunreinigungen, wie beispielsweise Verunreinigungen der Felge beim Aufziehen des Reifens auf die Felge, reduziert.

In einer anderen bevorzugten Ausführung der Erfindung ist der Schallabsorber ein Halbrohr, dessen Querschnitt ein Halbkreis oder ein Halboval ist, wobei die Wandungen des Halbrohres auf dem Dichtmittel aufliegen. Anstatt eines Halbrohres können auch zwei oder mehr Halbrohre längsachsparallel angeordnet werden. Hier ist zusätzlich zur verbesserten Abdichtung ebenfalls die Schallabsorption durch eine Vergrößerung der Oberfläche des Schallabsorbers verbessert. Weiterhin sind durch die Abdeckung der klebrigen Dichtmitteloberfläche Verunreinigungen, wie beispielsweise Verunreinigungen der Felge, beim Aufziehen des Reifens auf die Felge, reduziert.

Zweckmäßig ist es, wenn das Dichtmittel eine viskose Mischung auf Basis eines Butylkautschukes, eines Polybutens oder auf Basis von Silikon ist.

Da die Fließfähigkeit des Dichtmittels durch die geringe Auflagefläche des Schallabsorbers verbessert ist, kann die Schichtdicke des Dichtmittels verringert werden und zwischen 2 mm und 5 mm, vorzugsweise etwa 3,5 mm betragen. Hierdurch ist an Kosten sowie an Reifengewicht gespart.

Um bei der Reifenmontage die Felge nicht mit Dichtmittel zu verschmutzen, ist es vorteilhaft, wenn der Schallabsorber exzentrisch in Bezug auf den Reifenzenit angeordnet ist. Vorzugsweise ist der Schallabsorber in Richtung Reifenaußenseite verschoben angeordnet.

Alternativ zur exzentrischen Anordnung des Schallabsorbers kann dieser eine derartige Breite aufweisen, die etwa der Breite des Dichtmittels entspricht. Auch hier wird bei der Reifenmontage die Felge durch Abdeckung des Dichtmittels mit dem Schallabsorber nicht verschmutzt.

Weitere Merkmale, Vorteile und Einzelheiten der Erfindung werden nun anhand der Zeichnungen, die neben einem Ausführungsbeispiel des Standes der Technik schematische Ausführungsbeispiele des Schallabsorbers darstellen, näher beschrieben. Dabei zeigen die:
Fig. 1 einen Querschnitt durch einen Fahrzeugluftreifen des Standes der Technik;
Fig. 2 eine perspektivische Ansicht eines Teilabschnittes eines Schallabsorbers, welcher in einem erfindungsgemäßen Fahrzeugluftreifen einsetzbar ist;
Fig. 3 eine perspektivische Ansicht eines Teilabschnittes eines weiteren Schallabsorbers, welcher in einem erfindungsgemäßen Fahrzeugluftreifen einsetzbar ist.

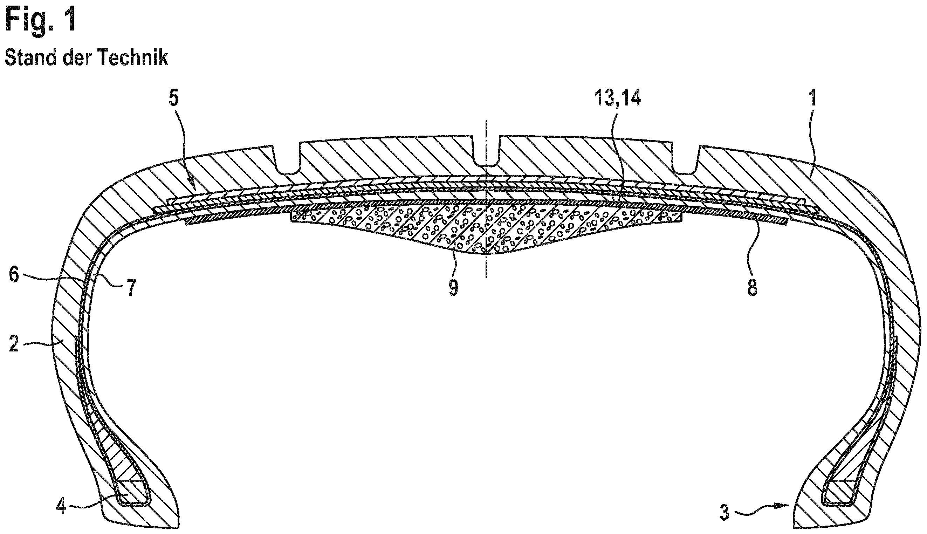

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist ein Dichtmittel 8 aufgebracht, welches in der Lage ist, sich bei Durchstich - Beschädigung des Reifens - selbstabdichtend zu verhalten. Am Dichtmittel 8 haftet vollflächig ein ringkreisförmiger Innenabsorber 9 in Funktion eines Schallabsorbers, wie nachfolgend beschrieben. Der Schallabsorber 9 weist eine Auflageseite 13 auf. Die Auflageseite 13 ist diejenige Fläche des Schallabsorbers, die dem Dichtmittel 8 zugewandt ist. Die Auflageseite 13 entspricht hier aufgrund der vollfächigen Auflage der Auflagefläche 14. Der Innenabsorber 9 ist bezüglich seiner schallabsorbierenden Eigenschaften auf die Reifenhohlraumfrequenz abgestimmt. Der Innenabsorber 9 weist beispielsweise hier einen etwa langgestreckt dreieckförmigen, bezüglich der Symmetrieachse des Reifens -welche durch den Reifenzenit verläuft - symmetrischen Querschnitt auf, welcher mit seiner Auflageseite 13 vollflächig auf dem Dichtmittel 8 haftet. Der Schaumstoff des Innenabsorber 9 ist ein offenzelliger Schaumstoff, da dieser am besten dazu geeignet ist, Schall zu absorbieren. Als Dichtmittel kommen beispielsweise Polyurethan-Gele oder viskose Mischungen auf Basis von Butylkautschuken, Polybutenen oder Silikon in Frage, wobei die Mischungen die üblichen weiteren Bestandteile, wie Weichmacheröle, enthalten können. Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 7 mm und 8 mm beträgt. Der vorgefertigte Innenabsorber 9 wird in das Innere des Reifens eingebracht. Nach dem Ausreagieren haftet der Innenabsorber 9 an dem elastisch deformierbaren, aber weitestgehend ortsfest verbleibenden Dichtmittel 8.

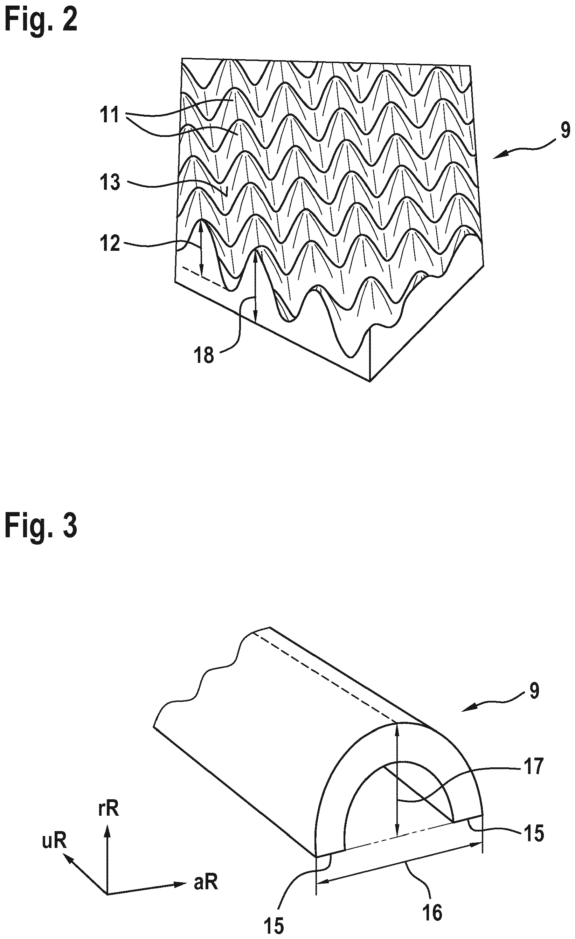

Die Fig. 2 zeigt eine perspektivische Ansicht eines Teilabschnittes eines Schallabsorbers 9 aus offenzelligem Schaumstoff, welcher in einem erfindungsgemäßen Fahrzeugluftreifen für PKW, beispielsweise der Dimension 235/40 R 18, einsetzbar ist.
Der Schallabsorber 9 besteht aus einem Noppenschaumstoff, wobei die Auflageseite 13 des Schallabsorbers 9 die Noppen 11 aufweist. Der Schallabsorber 9 liegt mit den Spitzen der Noppen 11 haftend auf dem Dichtmittel (nicht dargestellt) auf. Die der Auflageseite 13 gegenüberliegenden Fläche kann dabei eben und glatt oder ebenfalls eine Struktur zur verbesserten Schallabsorption aufweisen. Es liegen nur die Spitzen der Noppen 11 auf dem Dichtmittel auf, so dass die Auflagefläche auf dem Dichtmittel zwischen 5% und 50% in Bezug auf die Gesamtfläche der Auflageseite aufweist. Alle Noppen 11 weisen eine etwa gleiche Höhe 12 auf. Der Noppenschaumstoff hat eine Dicke 18 von etwa 30mm, gemessen an der dicksten Stelle des Noppenschaumstoffs.

Die Fig. 3 zeigt eine perspektivische Ansicht eines Teilabschnittes eines weiteren Schallabsorbers 9, welcher in einem erfindungsgemäßen Fahrzeugluftreifen einsetzbar ist. Der Schallabsorber 9 besteht aus einem Halbrohr oder zwei nebeneinander aufgelegten Halbrohren (nicht dargestell), deren Querschnitte Halbkreise sind. Die Wandungen 15 des Halbrohres/der Halbrohre liegen auf dem Dichtmittel (nicht dargestellt) auf. Der Schallabsorber 9 ist derart im Reifen angeordnet, dass die Längsachse des Halbrohres/der Halbrohre (gestrichtelte Linie) parallel zur Reifenumfangsrichtung angeordnet ist. Für die Reifendimension 235/40 R 18 weist der Schallabsorber 9 ein Breite 16 von 120 mm auf, wobei sich die Breite von Außenfläche zu Außenfläche parallel zur axialen Richtung aR und an der breitesten Stelle bemisst.

Der Schallabsorber 9 weist eine Höhe 17 von 60 mm bei einfachem Halbrohr und von 30 mm bei zwei nebeneinander liegenden Halbrohren auf, wobei sich die Höhe parallel zur radialen Richtung rR und an der höchsten Stelle bemisst.

### Bezugszeichenliste

- 1: Laufstreifen
- 2: Seitenwand
- 3: Wulstbereich
- 4: Wulstkern
- 5: Gürtelverband
- 6: Karkasseinlage
- 7: Innenschicht
- 8: Dichtmittellage
- 9: Innenabsorber / Schallabsorber
- 10: Schallabsorberkörper
- 11: Noppe
- 12: Höhe der Noppe
- 13: Auflageseite
- 14: Auflagefläche
- 15: Wandung
- 16: Breite des Schallabsorbers
- 17: Höhe des Schallabsorbers
- 18: Dicke des Schallabsorbers

- aR: axiale Richtung
- rR: radiale Richtung
- uR: Umfangsrichtung

## Patentansprüche

1. Fahrzeugluftreifen mit einem in seinem Inneren an der dem Laufstreifen (1) gegenüberliegenden Innenfläche haftend angebrachten Schallabsorber (9) aus Schaumstoff, wobei der Schallabsorber (9) eine Auflageseite (13) aufweist, mit welcher dieser an einem vorab aufgebrachten, selbsttätig abdichtenden Dichtmittel (8) haftet und wobei das Dichtmittel (8) zumindest unmittelbar nach seinem Aufbringen eine zum Anhaften des Schallabsorbers (9) erforderliche Klebrigkeit aufweist, **dadurch gekennzeichnet, dass** die Auflageseite (13) des Schallabsorbers (9) eine Auflagefläche (14) auf dem Dichtmittel (8) zwischen 5% und 50% in Bezug auf die Gesamtfläche der Auflageseite (13) aufweist.

2. Fahrzeugluftreifen nach Anspruch 1, **dadurch gekennzeichnet, dass** die Auflageseite (13) des Schallabsorbers (9) eine Auflagefläche (14) auf dem Dichtmittel (8) zwischen 10% und 40%, bevorzugt zwischen 20% und 30% in Bezug auf die Gesamtfläche der Auflageseite (13) aufweist.

3. Fahrzeugluftreifen nach Anspruch 1 oder 2, **dadurch gekennzeichnet, dass** der Schallabsorber (9) ein Noppenschaumstoff ist, wobei die Auflageseite (13) des Schallabsorbers (9) die Noppen (11) aufweist und wobei die Noppenspitzen auf dem Dichtmittel (8) aufliegen und wobei vorzugsweise der Noppenschaumstoff eine Dicke (18) von 10 mm bis 50 mm, bevorzugt von 20 mm bis 30 mm aufweist.

4. Fahrzeugluftreifen nach Anspruch 1 oder 2, **dadurch gekennzeichnet, dass** der Schallabsorber (8) wenigstens ein Halbrohr ist, dessen Querschnitt einen Halbkreis oder ein Halboval ist, wobei die Wandungen (15) des Halbrohres auf dem Dichtmittel (8) aufliegen.

5. Fahrzeugluftreifen nach einem oder mehreren der Ansprüche 1 bis 4, **dadurch gekennzeichnet, dass** das Dichtmittel (8) eine viskose Mischung auf Basis eines Butylkautschukes, eines Polybutens oder auf Basis von Silikon ist.

6. Fahrzeugluftreifen nach einem oder mehreren der vorangehenden Ansprüche, **dadurch gekennzeichnet, dass** die Schichtdicke des Dichtmittels (8) zwischen 2 mm und 5 mm, vorzugsweise etwa 3,5 mm beträgt.

7. Fahrzeugluftreifen nach einem oder mehreren der vorangehenden Ansprüche, **dadurch gekennzeichnet, dass** der Schallabsorber (9) exzentrisch in Bezug auf den Reifenzenit angeordnet ist, vorzugsweise in Richtung Reifenaußenseite verschoben angeordnet ist.

8. Fahrzeugluftreifen nach einem oder mehreren der vorangehenden Ansprüche 1 bis 6, **dadurch gekennzeichnet, dass** der Schallabsorber (9) eine derartige Breite (16) aufweist, die etwa der Breite des Dichtmittels (8) entspricht.

## Claims

1. Pneumatic vehicle tire with a foam sound absorber (9) inside it, adhesively attached to the inner surface opposite from the tread (1), the sound absorber (9) having a contact side (13), by which it adheres to a previously applied, self-sealing sealant (8), and the sealant (8) having at least immediately after its application a tackiness required for the adhesive attachment of the sound absorber (9), **characterized in that** the contact side (13) of the sound absorber (9) has a contact area (14) on the sealant (8) of between 5% and 50% with respect to the total area of the contact side (13).

2. Pneumatic vehicle tire according to Claim 1, **characterized in that** the contact side (13) of the sound absorber (9) has a contact area (14) on the sealant (8) of between 10% and 40%, preferably between 20% and 30%, with respect to the total area of the contact side (13).

3. Pneumatic vehicle tire according to Claim 1 or 2, **characterized in that** the sound absorber (9) is a convoluted foam, the contact side (13) of the sound absorber (9) having the convolutions (11) and the tips of the convolutions lying on the sealant (8) and the convoluted foam preferably having a thickness (18) of 10 mm to 50 mm, with preference of 20 mm to 30 mm.

4. The pneumatic vehicle tire according to Claim 1 or 2, **characterized in that** the sound absorber (8) is at least one half tube, the cross section of which is a half circle or a half oval, the walls (15) of the half tube lying on the sealant (8).

5. Pneumatic vehicle tire according to one or more of Claims 1 to 4, **characterized in that** the sealant (8) is a viscous mixture based on a butyl rubber, a polybutene or on the basis of silicone.

6. Pneumatic vehicle tire according to one or more of the preceding claims, **characterized in that** the layer thickness of the sealant (8) is between 2 mm and 5 mm, preferably approximately 3.5 mm.

7. Pneumatic vehicle tire according to one or more of the preceding claims, **characterized in that** the sound absorber (9) is arranged eccentrically with respect to the zenith of the tire, preferably is arranged displaced in the direction of the outer side of the tire.

8. Pneumatic vehicle tire according to one or more of the preceding Claims 1 to 6, **characterized in that** the sound absorber (9) has such a width (16) that corresponds approximately to the width of the sealant (8) .

## Revendications

1. Pneumatique de véhicule avec un amortisseur de bruit (9) installé par adhérence dans son espace intérieur sur la face intérieure opposée à la bande de roulement (1), dans lequel l'absorbeur de bruit (9) présente un côté d'application (13), avec lequel celui-ci adhère à un moyen d'étanchéité (8) automatiquement étanche appliqué au préalable et dans lequel le moyen d'étanchéité (8) présente au moins immédiatement après son application un caractère poisseux nécessaire pour l'adhérence de l'absorbeur de bruit (9), **caractérisé en ce que** le côté d'application (13) de l'absorbeur de bruit (9) présente une surface d'application (14) sur le moyen d'étanchéité (8) comprise entre 5 % et 50 % par rapport à la surface totale du côté d'application (13).

2. Pneumatique de véhicule selon la revendication 1, **caractérisé en ce que** le côté d'application (13) de l'absorbeur de bruit (9) présente une surface d'application (14) sur le moyen d'étanchéité (8) comprise entre 10 % et 40 %, de préférence entre 20 % et 30 % par rapport à la surface totale du côté d'application (13).

3. Pneumatique de véhicule selon une revendication 1 ou 2, **caractérisé en ce que** l'absorbeur de bruit (9) est une mousse bosselée, dans lequel le côté d'application (13) de l'absorbeur de bruit (9) présente les bosses (11) et dans lequel les pointes des bosses s'appliquent sur le moyen d'étanchéité (8) et dans lequel de préférence la mousse bosselée présente une épaisseur (18) de 10 mm à 50 mm, de préférence de 20 mm à 30 mm.

4. Pneumatique de véhicule selon une revendication 1 ou 2, **caractérisé en ce que** l'absorbeur de bruit (9) est au moins un demi-tube, dont la section transversale est un demi-cercle ou un demi-ovale, dans lequel les parois (15) du demi-tube s'appliquent sur le moyen d'étanchéité (8) .

5. Pneumatique de véhicule selon une ou plusieurs des revendications 1 à 4, **caractérisé en ce que** le moyen d'étanchéité (8) est un mélange visqueux à base d'un caoutchouc butyle, d'un polybutène ou à base de silicone.

6. Pneumatique de véhicule selon une ou plusieurs des revendications précédentes, **caractérisé en ce que** l'épaisseur de couche du moyen d'étanchéité (8) vaut entre 2 mm et 5 mm, de préférence environ 3,5 mm.

7. Pneumatique de véhicule selon une ou plusieurs des revendications précédentes, **caractérisé en ce que** l'absorbeur de bruit (9) est disposé de façon excentrée par rapport au zénith du pneumatique, et est de préférence disposé en décalage en direction du côté extérieur du pneumatique.

8. Pneumatique de véhicule selon une ou plusieurs des revendications précédentes 1 à 6, **caractérisé en ce que** l'absorbeur de bruit (9) présente une largeur (16) telle qu'elle corresponde environ à la largeur du moyen d'étanchéité (8).
